# EUROPEAN PATENT APPLICATION

(11) **EP 4 303 080 A1**
(43) Date of publication of application: **10.01.2024**
(21) Application number: 22763244.5
(22) Date of filing: 01.03.2022
(51) Int. Cl.: B60R 11/04, H04N 5/225, H04N 5/232, H04N 5/235, G02B 30/31, H04N 13/312, H04N 13/346, H04N 13/363, H04N 13/366, G02B 27/01, G02F 1/13

(54) **IMAGING DEVICE AND THREE-DIMENSIONAL DISPLAY DEVICE**

(30) Priority: 01.03.2021 JP 2021032012
(71) Applicant: Kyocera Corporation, Kyoto-shi Kyoto 612-8501 (JP)
(72) Inventor: KUSAFUKA, Kaoru, Kyoto-shi, Kyoto 612-8501 (JP); SATOU, Akinori, Kyoto-shi, Kyoto 612-8501 (JP); HARA, Masato, Kyoto-shi, Kyoto 612-8501 (JP)
(74) Representative: TBK
(86) International application number: PCT/JP2022/008562
(87) International publication number: WO 2022/186189

(57) **Abstract**

An imaging device includes a light source, a controller, and a camera. The camera generates a captured image by obtaining, in a first cycle, an image of infrared light. The camera also captures an image of infrared light (first light) transmitted through a windshield. The light source emits the infrared light in a second cycle. The second cycle for the emission is longer than the first cycle for the generation of the captured image. The controller generates a third image as a difference between a first image and a second image.

## Description

### TECHNICAL FIELD

The present disclosure relates to an imaging device and a three-dimensional (3D) display device.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2015-097087

### SUMMARY

In one embodiment of the present disclosure, an imaging device includes a camera, a light source, and a controller. The camera faces an optical member that at least partially transmits and reflects light. The camera generates a captured image by obtaining, in a first cycle, an image of first light transmitted through the optical member and second light reflected from the optical member. The light source emits, in a second cycle, third light having a wavelength to be imaged with the camera. The controller processes the captured image. The second cycle is longer than the first cycle. The controller generates a fourth image as a difference between a second image captured when the third light is emitted and a third image captured when the third light is not emitted.

In one embodiment of the present disclosure, a three-dimensional display device includes the above imaging device and an image projector. The image projector includes a display device, a magnifying optical system, and a third controller. The display device includes a display panel that emits image light, and a parallax barrier including light-transmissive portions and light-reducing portions being alternately arranged. The magnifying optical system magnifies the image light. The third controller controls the display device based on a detected position of an eye of a user.

In one embodiment of the present disclosure, a three-dimensional display device includes the above imaging device and an image projector. The image projector includes a display device and a magnifying optical system. The display device includes a display panel that emits image light, and a parallax barrier including light-transmissive portions and light-reducing portions being alternately arranged. The magnifying optical system magnifies the image light. A second controller controls the display device based on a detected position of an eye of a user.

### BRIEF DESCRIPTION OF THE DRAWINGS

FIG. 1 is a schematic diagram of an example movable body incorporating an imaging device.
FIG. 2 is a schematic diagram of an example three-dimensional (3D) display device.
FIG. 3 is a schematic diagram describing the relationship between the eyes of a driver, a display, and a parallax barrier.
FIG. 4 is a flowchart of a detection process.
FIG. 5 is a schematic diagram of another example 3D display device.
FIG. 6A is a photograph of a first image captured when light is emitted from a light source.
FIG. 6B is a photograph of a second image captured when light is not emitted from the light source.
FIG. 6C is a photograph of a third image being a difference image.

### DESCRIPTION OF EMBODIMENTS

The objects, features, and advantages of the present disclosure will become more apparent from the following detailed description and the drawings.

A vehicle incorporates a driver monitoring system with the structure that forms the basis of the present disclosure for monitoring the state of a driver to, for example, improve vehicle safety and assist autonomous driving control. The state of the driver can be detected based on, for example, the posture and facial movement of the driver in an image captured with a camera.

A device described in Patent Literature 1 emits an infrared beam toward the driver and captures an image of the driver with an infrared camera using infrared light reflected from the windshield containing an infrared reflective film.

A camera to image light reflected from an optical member also images light transmitted through the optical member. External light may thus add unintended information about objects outside the vehicle to in-vehicle information, which may affect, for example, a driver monitoring system that uses the in-vehicle information.

The present disclosure is directed to an imaging device and a three-dimensional (3D) display device that can capture improved images.

An embodiment of the present disclosure will now be described in detail with reference to the drawings. The drawings used herein are schematic and are not drawn to scale relative to the actual size of each component.

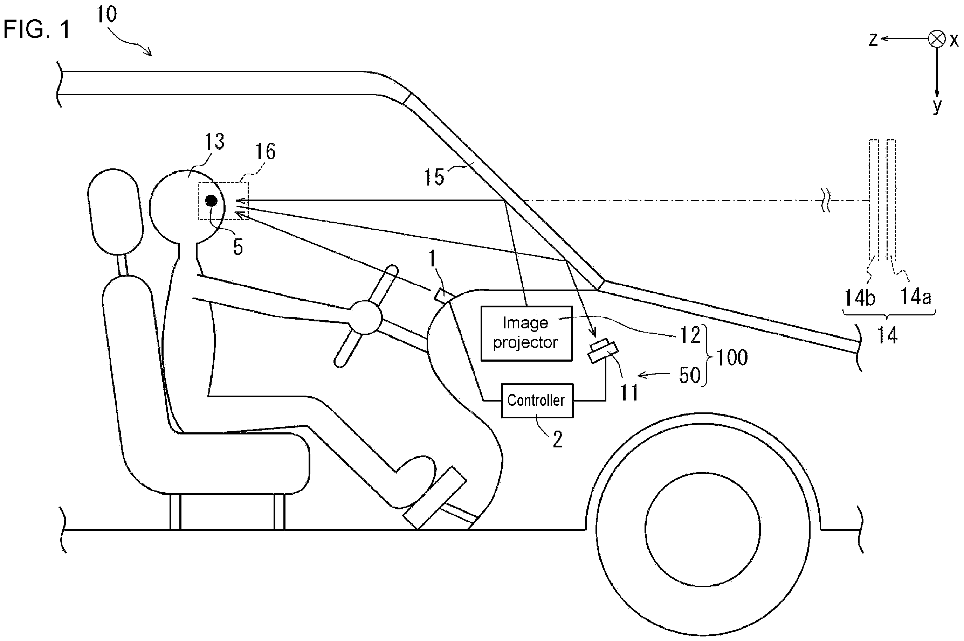

As illustrated in FIG. 1, an imaging device 50 according to one embodiment of the present disclosure is incorporated in a movable body 10. The imaging device 50 includes a light source 1, a controller 2, and a camera 11. The movable body 10 may include a 3D display device 100. The 3D display device 100 includes the imaging device 50 and an image projector 12.

Examples of the movable body in the present disclosure include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle include a human-powered vehicle. The classification of the vehicle is not limited to the above examples. Examples of the automobile include an industrial vehicle travelling on a road. One type of vehicle may fall within multiple classes. Examples of the vessel include a jet ski, a boat, and a tanker. Examples of the aircraft include a fixed-wing aircraft and a rotary-wing aircraft. In the example described below, the movable body 10 is a passenger vehicle. The movable body 10 may be any of the above examples rather than a passenger vehicle.

The imaging device 50 will now be described. The imaging direction of the camera 11 may be toward the front of the movable body 10. The camera 11 is attached to the movable body 10. The camera 11 captures an image of a space expected to include, for example, the eyes, the face, or the upper body of the driver or a user 13 of the movable body 10. The camera 11 has the imaging direction along the optical axis of the camera 11 and toward the subject. In other words, the imaging direction is along the optical axis of the camera 11 and opposite to the traveling direction of incident light.

A windshield 15 as an optical member may be located ahead in the imaging direction of the camera 11. The windshield 15 can transmit light from outside the movable body. In one or more embodiments of the present disclosure, light transmitted through the windshield 15 and traveling toward the camera 11 is referred to as first light. The windshield 15 can reflect light from inside the movable body. In one or more embodiments of the present disclosure, light reflected from the windshield 15 and traveling toward the camera 11 is referred to as second light. The camera 11 can image a mixture of the first light and the second light.

An image of the user 13 may appear on the windshield 15 with reflected light from inside the movable body. The second light may contain the image of the user 13. For the user 13 to be located within a predetermined range during driving, the camera 11 captures an image of the space expected to include the user 13 through the windshield 15. The camera 11 captures an image of the user 13 in the space through the windshield 15. The camera 11 may capture an image of the user 13 by imaging the light reflected from the windshield 15. The camera 11 captures an image of at least the face or the eyes of the user 13 of the movable body 10 through the windshield 15.

The camera 11 may be installed at any position inside or outside the movable body 10. For example, the camera 11 may be installed inside or on a dashboard in the movable body 10. For example, the camera 11 may be installed inside another device such as an air duct.

The camera 11 may be an infrared camera that receives infrared light and generates images. The camera 11 may function both as an infrared camera and a visible light camera. The camera 11 may include, for example, a charge-coupled device (CCD) image sensor or a complementary metal-oxide semiconductor (CMOS) image sensor.

The light source 1 emits third light with a wavelength that can be imaged. For the camera 11 being an infrared camera, the light source 1 emits infrared light as the third light. The light source 1 emits the third light toward the space expected to include the user 13. For the user 13 being a driver, for example, the space expected to include the user 13 is a space above the driver's seat. The third light emitted from the light source 1 is reflected from the user 13. The third light reflected from the user 13 may partially be the second light traveling toward the camera through the windshield 15. As described above, the second light is reflected from the windshield 15 and imaged with the camera 11. Sunlight being external light can be at least partially transmitted through the windshield 15. Sunlight includes infrared light. The camera 11 faces the windshield 15 and may image infrared light transmitted through the windshield 15. More specifically, the camera 11 images the mixture of the light reflected from the windshield 15 and the light transmitted through the windshield 15. As described below, an image of the user 13 is used in, for example, a detection process to detect the positions of eyes 5 of the user 13. The camera 11 images the first light and generates a composite image of objects outside the movable body 10 (e.g., people, buildings, and trees) and the user 13. The image captured with the camera 11 may include the user 13 inside the movable body 10 and the objects outside the movable body 10. The objects outside the movable body 10 can be unintended information in the detection process and may lower the accuracy of the detection process.

In the present embodiment, the camera 11 generates a captured image by imaging the mixture of the first light and the second light in a first cycle. The light source 1 emits the third light in a second cycle. The second cycle for light emission is longer than the first cycle for generating a captured image. The camera 11 can capture an image when the third light is or is not emitted from the light source 1. A first image is captured when the third light is emitted. A second image is captured when the third light is not emitted. An image captured when the third light is emitted can be an image captured during light emission as well as an image captured using accumulated light including emitted light. The image captured using accumulated light includes an image captured with light emitted for a shorter period of time than the time for each frame. The first image has a relatively large amount of third light emitted from the light source 1 and reflected from the windshield 15. The first image can include a subject in the movable body 10 that is likely to be captured with high brightness. The second image has a relatively small amount of third light emitted from the light source 1 and reflected from the windshield 15. The second image can include a subject in the movable body 10 that is likely to be captured with low brightness. The amount of infrared light that is transmitted through the windshield 15 is the same when the light is emitted and when the light is not emitted. The images of the objects outside the movable body 10 are thus captured with substantially the same brightness in the first image and in the second image.

The controller 2 processes the images captured with the camera 11. The controller 2 generates a third image as a difference image between the first image and the second image described above. Both the first image and the second image include unintended information about objects outside the movable body 10, which is not used in the subsequent detection process. The third image as the difference image between the first image and the second image can include less information about objects outside the movable body 10 that can be at least partially cancelled. In the present embodiment, the imaging device 50 can obtain captured images with reduced reflection of objects outside the movable body 10.

An observation target such as the driver 13 may be illuminated with uneven light. An example of such uneven light is sunlight illuminating the target from the left or the right of the target. The controller 2 generates the third image as the difference image between the first image and the second image. The third image can reduce the unevenness caused by such uneven light by obtaining the difference image between the first image and the second image.

The camera 11 generates an image in the first cycle. The light source 1 emits light in the second cycle. When the second cycle is an integer multiple of the first cycle, the first images and the second images are generated at regular intervals. When, for example, the second cycle is twice as long as the first cycle, a first image and a second image are generated alternately. The controller 2 generates the third image by subtracting the second image obtained before the first image from the first image. The controller 2 may also generate the third image by subtracting the second image obtained after the first image from the first image. An image of the user 13 in the movable body 10 to be used in the detection process appears clearly in the first image. When the first image that is more recent in time than the second image is used to generate the third image, more recent information about the user 13 can be used in the detection process.

The camera 11 and the light source 1 may operate in direct or indirect cooperation with each other. As in the present embodiment, when, for example, the controller 2 controls the operations of both the camera 11 and the light source 1, the camera 11 and the light source 1 can operate in direct cooperation with each other in response to a common control signal. When the controller 2 controls the operations of the camera 11 and the light source 1, the first image captured when the light is emitted and the second image captured when the light is not emitted can be identified based on the timing of image capturing performed by the camera 11 and the timing of light emission performed by the light source 1.

The camera 11 and the light source 1 may not operate in cooperation with each other. For example, the controller 2 may control the operation of the camera 11 and may not control the operation of the light source 1. When the controller 2 does not control the operation of the light source 1, the light source 1 emits light independently. In this case, the controller 2 may determine whether the image is the first image or the second image based on the brightness of the captured image generated by the camera 11 in the first cycle. The first image captured when the light is emitted has higher brightness than the second image captured when the light is not emitted. For each captured image generated by the camera 11, for example, the brightness values of all pixels are added. When the sum of the brightness values is higher than a predetermined value (a bright image), the image can be determined as the first image. When the sum of the brightness values is lower than or equal to the predetermined value (a dark image), the image can be determined as the second image.

The controller 2 may control the exposure value of the camera 11. The exposure value of the camera 11 for the subsequent image is determined, when a single captured image is obtained, based on the pixel values of the previous captured image. As described above, a first image captured when light is emitted from the light source and a second image captured when light is not emitted from the light source are obtained in the present embodiment. Thus, when, for example, the exposure value for the first image to be captured subsequently is changed based on the pixel values of the second image that is a dark image, or when the exposure value for the second image to be captured subsequently is changed based on the first image that is a bright image, the first image and the second image of the same object outside the movable body 10 can have different brightness values. In this case, the third image as the difference image between the first image and the second image may include unintended information about objects outside the movable body 10 without such unintended information being reduced.

In the present embodiment, the controller 2 controls the camera 11 to set the same exposure value for the first image and the second image. With the same exposure value for the first image and the second image, the third information can include less unintended information. The controller 2 may control the camera 11 to capture the first image and the second image with an exposure value determined based on the first image. The camera 11 captures the second image that is a dark image with an exposure value determined based on the first image that is a bright image captured when light is emitted from the light source. The second image is captured with the same exposure value as the value determined based on the first image. Images of objects outside the movable body 10 as unintended information can thus be captured with a lower brightness value in each of the first image and the second image than in an image of the user 13 inside the movable body 10. In the exposure controlled by the controller 2, the controller 2 does not control the exposure value based on the second image, and does not control the exposure value based on the third image.

The windshield 15 may reduce infrared light transmitted from outside. The third image can include less unintended information about objects outside the movable body 10. With the windshield 15 reducing infrared light, the objects outside the movable body 10 in the first image and the second image can be captured with lower brightness. Although the objects outside the movable body 10 partially remain in the third image, such objects have lower brightness than the user 13 and thus are less likely to affect the detection process.

The windshield 15 may include a resin sheet containing an infrared light absorber or may be made of a glass material with an infrared light absorber dispersed to reduce transmitted infrared light. The resin sheet containing the infrared light absorber may be attached to the outer surface of the windshield 15 to allow light to be reflected from the windshield 15 without being absorbed before the light is imaged with the camera 11.

The light source 1 may emit infrared light directly or indirectly to the space expected to include the user 13. Indirect emission of infrared light from the light source 1 may refer to the light reaching the space expected to include the user 13 after the light is reflected from a reflector. The reflector may be a reflective member such as a mirror and may be the windshield 15. When the windshield 15 is the reflector, for example, a light path of light imaged with the camera 11 and a light path of light emitted from the light source 1 can be adjacent to each other. With the camera 11 and the light source 1 being adjacent to each other, the imaging device 50 can be downsized.

The controller 2 may detect the user 13 based on the third image. The controller 2 can detect, for example, the face of the user 13 or the upper body of the user 13 to obtain the driving state of the movable body 10. For example, the controller 2 can detect, as the driving state, distracted driving based on, for example, the orientation of the face and the facial movements of the user 13. For example, the controller 2 can detect, as the driving state, drowsy driving based on, for example, the upper body movements of the user 13.

The controller 2 may detect the positions of the eyes 5 of the user 13 based on the third image. The imaging device 50 may output positional information about the detected positions of the eyes 5 to the image projector 12. The image projector 12 may control an image to be projected based on the positional information. The imaging device 50 may output information indicating the positions of the eyes 5 to the image projector 12 with wires or wirelessly. The wires may include, for example, a controller area network (CAN).

As described above, the third image includes less unintended information about objects outside the movable body 10. This improves the detection accuracy in detecting the user 13 or detecting the positions of the eyes of the user 13 based on the third image.

The controller 2 may output the third image. A controller (a second controller) other than the controller 2 may detect the positions of the eyes of the user 13 based on the third image output by the controller 2. The imaging device 50 may include a controller to generate the third image based on the first image and the second image and include another controller to detect the positions of the eyes of the user 13 based on the third image. The imaging device 50 can perform the generation process and the detection process in parallel.

The imaging device 50 may output the third image to an external device. The external device may detect the positions of the eyes 5 of the user 13 based on the output third image. The external device may output positional information about the detected positions of the eyes 5 to the image projector 12. The image projector 12 may control an image to be projected based on the positional information. The imaging device 50 may output a captured image to an external device with wires or wirelessly. The external device may output a captured image to the image projector 12 with wires or wirelessly. The wires may include, for example, a CAN.

The imaging device 50 may include, for example, a sensor. The sensor may be, for example, an ultrasonic sensor or an optical sensor. The controller 2 may detect the position of the head of the user 13 with the sensor, and may detect the positions of the eyes 5 of the user 13 based on the position of the head. The controller 2 may use two or more sensors to detect the positions of the eyes 5 of the user 13 as coordinates in a 3D space.

The 3D display device 100 will be described. The 3D display device 100 includes the imaging device 50 and the image projector 12. The image projector 12 may be at any position inside or outside the movable body 10. For example, the image projector 12 may be inside the dashboard in the movable body 10. The image projector 12 emits image light toward the windshield 15. The image light may be emitted through, for example, an opening in a housing 120.

The windshield 15 reflects image light emitted from the image projector 12. The image light reflected from the windshield 15 reaches an eye box 16. The eye box 16 is an area defined in a real space in which the eyes 5 of the user 13 are expected to be located based on, for example, the body shape, posture, and changes in the posture of the user 13. The eye box 16 may have any shape. The eye box 16 may include a planar or 3D region. The solid arrow in FIG. 1 indicates a path traveled by at least a part of image light emitted from the image projector 12 to reach the eye box 16. With the eyes 5 of the user 13 located in the eye box 16 receiving image light, the user 13 can view a virtual image 14. The virtual image 14 is on the dot-dash line extending frontward from the path extending from the windshield 15 to the eyes 5. The image projector 12 can function as a head-up display that enables the user 13 to view the virtual image 14. In FIG. 1, the direction in which the eyes 5 of the user 13 are aligned corresponds to x-direction. The vertical direction corresponds to y-direction. The imaging range of the camera 11 includes the eye box 16.

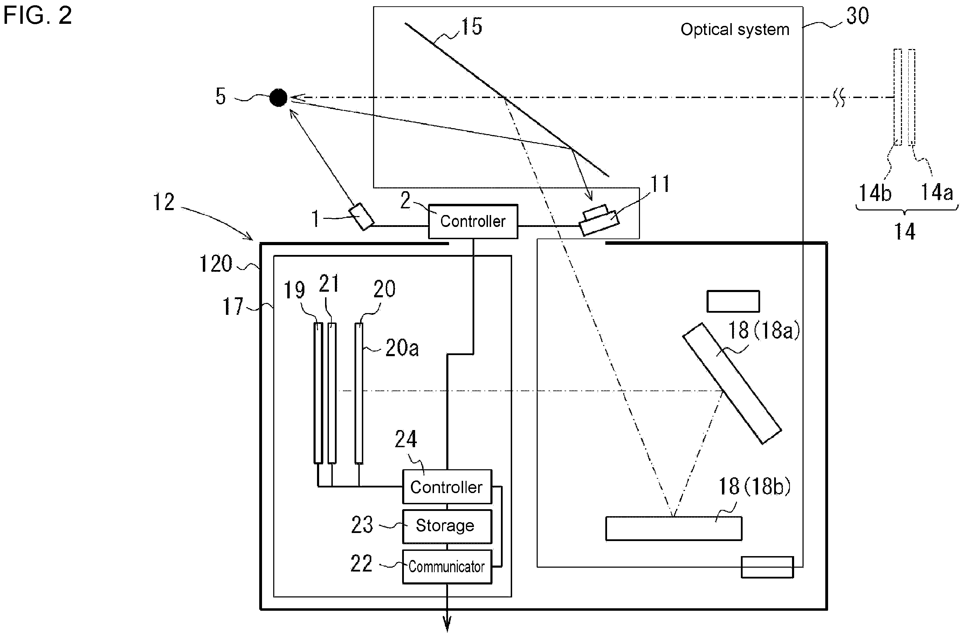

As illustrated in FIG. 2, the image projector 12 includes a 3D display device 17 and an optical element 18. The 3D display device 17 may include a backlight 19, a display 20 including a display surface 20a, a parallax barrier 21, and a controller 24. The 3D display device 17 may further include a communicator 22. The 3D display device 17 may further include a storage 23. The image projector 12 may include, for example, the housing 120. The housing 120 accommodates the 3D display device 17 and the optical element 18.

The optical element 18 may include a first mirror 18a and a second mirror 18b. At least either the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies an image displayed by the 3D display device 17. The dot-dash arrow in FIG. 2 indicates the traveling path of at least a part of image light emitted from the 3D display device 17 to be reflected from the first mirror 18a and the second mirror 18b and then exit the image projector 12. The image light emitted from the image projector 12 reaches the windshield 15, is reflected from the windshield 15, and then reaches the eyes 5 of the user 13. This allows the user 13 to view the image displayed by the 3D display device 17.

The optical element 18 and the windshield 15 allow image light emitted from the 3D display device 17 to reach the eyes 5 of the user 13. The optical element 18 may function as a magnifying optical system that magnifies image light. The optical element 18 and the windshield 15 may be included in an optical system 30. In other words, the optical system 30 includes the optical element 18 and the windshield 15. The optical system 30 allows image light emitted from the 3D display device 17 to travel along the optical path indicated by the dot-dash line and reach the eyes 5 of the user 13. The optical system 30 may control the traveling direction of image light to magnify or reduce an image viewable by the user 13. The optical system 30 may control the traveling direction of image light to deform an image viewable by the user 13 based on a predetermined matrix.

The optical element 18 may have a structure different from the illustrated structure. The mirror may include a concave mirror, a convex mirror, or a plane mirror. The concave mirror or the convex mirror may be at least partially spherical or aspherical. The optical element 18 may be one element or may include three or more elements, instead of two elements. The optical element 18 may include a lens in place of or in addition to a mirror. The lens may be a concave lens or a convex lens. The lens may be at least partially spherical or aspherical.

The backlight 19 is more away from the user 13 than the display 20 and the parallax barrier 21 on the optical path of image light. The backlight 19 emits light toward the parallax barrier 21 and the display 20. At least a part of light emitted from the backlight 19 travels along the optical path indicated by the dot-dash line and reaches the eyes 5 of the user 13. The backlight 19 may include a light emitter such as a light-emitting diode (LED), an organic EL element, or an inorganic EL element. The backlight 19 may have any structure that allows control of the light intensity and the light intensity distribution.

The display 20 includes a display panel. The display 20 may be, for example, a liquid-crystal device such as a liquid-crystal display (LCD). In the present embodiment, the display 20 includes a transmissive liquid-crystal display panel. The display 20 is not limited to this, and may include any of various display panels.

The display 20 includes multiple pixels and controls the light transmittance of light from the backlight 19 incident on each pixel to emit image light that then reaches the eyes 5 of the user 13. The user 13 views an image formed by image light emitted from each pixel in the display 20.

The parallax barrier 21 defines the traveling direction of incident light. With the parallax barrier 21 nearer the backlight 19 than the display 20, light emitted from the backlight 19 enters the parallax barrier 21 and then enters the display 20. In this case, the parallax barrier 21 blocks or attenuates a part of light emitted from the backlight 19 and transmits another part of the light toward the display 20. The display 20 emits incident light traveling in the direction defined by the parallax barrier 21 as image light traveling in the same direction. With the display 20 being nearer the backlight 19 than the parallax barrier 21, light emitted from the backlight 19 enters the display 20 and then enters the parallax barrier 21. In this case, the parallax barrier 21 blocks or attenuates a part of image light emitted from the display 20 and transmits another part of the image light toward the eyes 5 of the user 13.

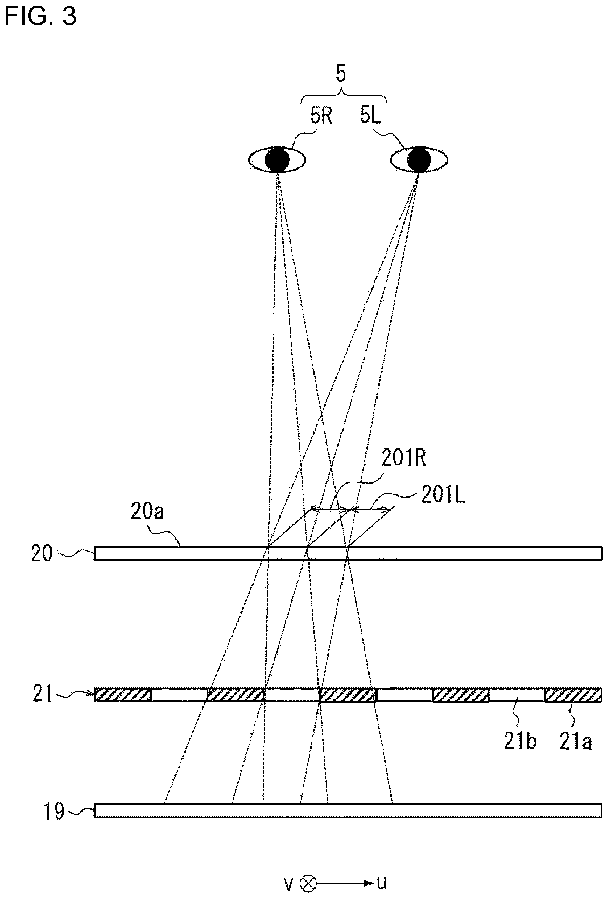

Irrespective of whether the display 20 or the parallax barrier 21 is nearer the user 13, the parallax barrier 21 can control the traveling direction of image light. The parallax barrier 21 allows a part of image light emitted from the display 20 to reach one of a left eye 5L and a right eye 5R (refer to FIG. 3) of the user 13, and another part of the image light to reach the other one of the left eye 5L and the right eye 5R of the user 13. In other words, the parallax barrier 21 directs at least a part of image light toward the left eye 5L of the user 13 and toward the right eye 5R of the user 13. The left eye 5L is also referred to as a first eye, and the right eye 5R as a second eye. In the present embodiment, the parallax barrier 21 is located between the backlight 19 and the display 20. In other words, light emitted from the backlight 19 first enters the parallax barrier 21 and then enters the display 20.

The parallax barrier 21 defines the traveling direction of image light to allow each of the left eye 5L and the right eye 5R of the user 13 to receive different image light. Each of the left eye 5L and the right eye 5R of the user 13 can thus view a different image.

As illustrated in FIG. 3, the display 20 includes left-eye viewing areas 201L viewable by the left eye 5L of the user 13 and right-eye viewing areas 201R viewable by the right eye 5R of the user 13 on the display surface 20a. The display 20 displays a parallax image including left-eye images viewable by the left eye 5L of the user 13 and right-eye images viewable by the right eye 5R of the user 13. A parallax image refers to an image projected toward the left eye 5L and the right eye 5R of the user 13 to generate parallax between the two eyes of the user 13. The display 20 displays left-eye images on the left-eye viewing areas 201L and right-eye images on the right-eye viewing areas 201R. In other words, the display 20 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display 20 may further include a display area to display a planar image on the display surface 20a. The planar image generates no parallax between the eyes 5 of the user 13 and is not viewed stereoscopically.

As illustrated in FIG. 3, the parallax barrier 21 includes open portions 21b and light-blocking portions 21a. The parallax barrier 21 located nearer the user 13 than the display 20 on the optical path of image light controls the transmittance of image light emitted from the display 20. The open portions 21b transmit light entering the parallax barrier 21 from the display 20. The open portions 21b may transmit light with a transmittance of a first predetermined value or higher. The first predetermined value may be, for example, 100% or a value close to 100%. The light-blocking portions 21a block light entering the parallax barrier 21 from the display 20. The light-blocking portions 21a may transmit light with a transmittance of a second predetermined value or lower. The second predetermined value may be, for example, 0% or a value close to 0%. The first predetermined value is higher than the second predetermined value.

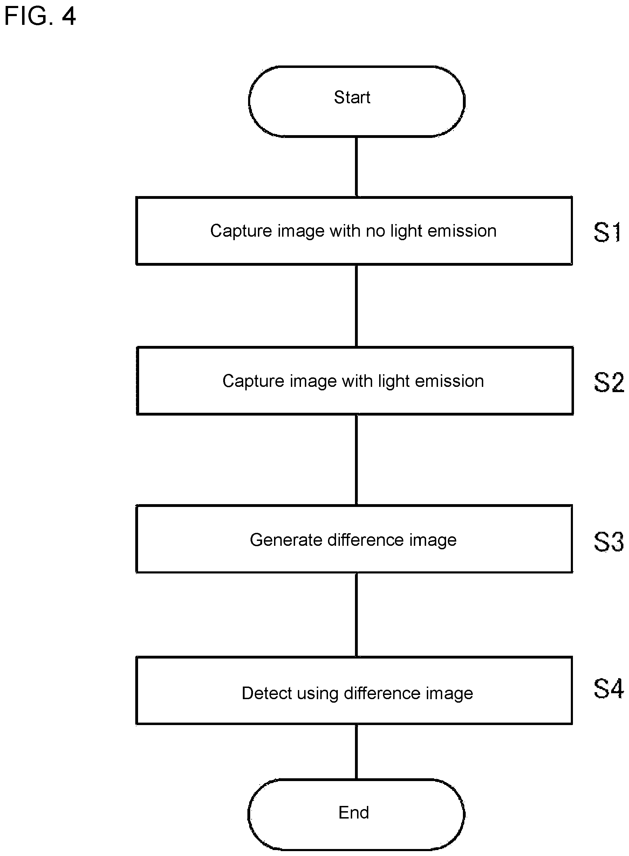

The open portions 21b and the light-blocking portions 21a are arranged alternately in u-direction indicating the parallax direction. The boundaries between the open portions 21b and the light-blocking portions 21a may extend in v-direction orthogonal to the parallax direction as illustrated in FIG. 4, or in a direction inclined with respect to v-direction at a predetermined angle. In other words, the open portions 21b and the light-blocking portions 21a may be arranged alternately in a predetermined direction including a component in the parallax direction.

In the present embodiment, the parallax barrier 21 is more away from the user 13 than the display 20 on the optical path of image light. The parallax barrier 21 controls the transmittance of light directed from the backlight 19 toward the display 20. The open portions 21b transmit light directed from the backlight 19 toward the display 20. The light-blocking portions 21a block light directed from the backlight 19 to the display 20. This structure allows light entering the display 20 to travel in a predetermined direction. The parallax barrier 21 can control a part of image light to reach the left eye 5L of the user 13. The parallax barrier 21 can control another part of the image light to reach the right eye 5R of the user 13.

The parallax barrier 21 may include a liquid crystal shutter. The liquid crystal shutter can control the light transmittance based on an applied voltage. The liquid crystal shutter may include multiple pixels and control the light transmittance for each pixel. The liquid crystal shutter can form a portion with a high light transmittance or a portion with a low light transmittance in an intended shape. The open portions 21b in the parallax barrier 21 including a liquid crystal shutter may have a transmittance of the first predetermined value or higher. The light-blocking portions 21a in the parallax barrier 21 including a liquid crystal shutter may have a transmittance of the second predetermined value or lower. The first predetermined value may be higher than the second predetermined value. The ratio of the second predetermined value to the first predetermined value may be set to 1/100 in one example. The ratio of the second predetermined value to the first predetermined value may be set to 1/1000 in another example. The parallax barrier 21 including the open portions 21b and the light-blocking portions 21a that can shift is also referred to as an active barrier.

The controller 24 controls the display 20. The controller 24 may control the parallax barrier 21 that is an active barrier. The controller 24 may control the backlight 19. The controller 24 obtains, from the imaging device 50, positional information about the positions of the eyes 5 of the user 13 and controls the display 20 based on the positional information. In the above structure, the controller 24 is a third controller. The controller 24 may control at least one of the parallax barrier 21 or the backlight 19 based on the positional information. The controller 24 may receive a third image output from the imaging device 50 and detect the eyes 5 of the user 13 based on the received third image. The controller 24 may control the display 20 based on the detected positions of the eyes 5. The controller 24 may control at least one of the parallax barrier 21 or the backlight 19 based on the detected positions of the eyes 5. In the above structure, the controller 24 is the second controller.

The controller 24 may be, for example, a processor. The controller 24 may include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The controller 24 may be either a system on a chip (SoC) or a system in a package (SiP) in which one or more processors cooperate with other components.

The communicator 22 may include an interface that can communicate with an external device. The external device may include, for example, the camera 11. The communicator 22 may obtain information from the camera 11 and output the information to the controller 24. The interface that can perform communication in the present disclosure may include, for example, a physical connector and a wireless communication device. The physical connector may include an electric connector for transmission with electric signals, an optical connector for transmission with optical signals, and an electromagnetic connector for transmission with electromagnetic waves. The electric connector may include a connector complying with IEC 60603, a connector complying with the USB standard, or a connector used for an RCA terminal. The electric connector may include a connector used for an S terminal specified by EIAJ CP-121aA or a connector used for a D terminal specified by EIAJ RC-5237. The electric connector may include a connector complying with the HDMI (registered trademark) standard or a connector used for a coaxial cable including a British Naval Connector, also known as, for example, a Baby-series N Connector (BNC). The optical connector may include a connector complying with IEC 61754. The wireless communication device may include a wireless communication device complying with the Bluetooth (registered trademark) standard and a wireless communication device complying with other standards including IEEE 802.1a. The wireless communication device includes at least one antenna.

The storage 23 may store various sets of information or programs for causing the components of the 3D display device 17 to operate. The storage 23 may include, for example, a semiconductor memory. The storage 23 may function as a work memory for the controller 24. The controller 24 may include the storage 23.

As illustrated in FIG. 3, light emitted from the backlight 19 passes through the parallax barrier 21 and the display 20 to reach the eyes 5 of the user 13. The broken lines indicate the paths traveled by light from the backlight 19 to reach the eyes 5. Light through the open portions 21b in the parallax barrier 21 to reach the right eye 5R passes through the right-eye viewing areas 201R in the display 20. In other words, light through the open portions 21b allows the right eye 5R to view the right-eye viewing areas 201R. Light through the open portions 21b in the parallax barrier 21 to reach the left eye 5L passes through the left-eye viewing areas 201L in the display 20. In other words, light through the open portions 21b allows the left eye 5L to view the left-eye viewing areas 201L.

The display 20 displays right-eye images on the right-eye viewing areas 201R and left-eye images on the left-eye viewing areas 201L. The parallax barrier 21 allows image light for the left-eye images to reach the left eye 5L and image light for the right-eye images to reach the right eye 5R. More specifically, the open portions 21b allow image light for the left-eye images to reach the left eye 5L of the user 13 and image light for the right-eye images to reach the right eye 5R of the user 13. The 3D display device 17 with this structure can project a parallax image to the two eyes of the user 13. The user 13 views a parallax image with the left eye 5L and the right eye 5R to view the image stereoscopically.

Image light passing through the open portions 21b in the parallax barrier 21 and emitted from the display surface 20a of the display 20 at least partially reaches the windshield 15 through the optical element 18. The image light is reflected from the windshield 15 and reaches the eyes 5 of the user 13. This allows the eyes 5 of the user 13 to view a first virtual image 14a located more away in the negative z-direction than the windshield 15. The first virtual image 14a corresponds to the image appearing on the display surface 20a. The open portions 21b and the light-blocking portions 21a in the parallax barrier 21 form a second virtual image 14b in front of the windshield 15 and nearer the windshield 15 than the first virtual image 14a. As illustrated in FIG. 2, the user 13 can view an image with the display 20 appearing at the position of the first virtual image 14a and the parallax barrier 21 appearing at the position of the second virtual image 14b.

The 3D display device 17 emits image light for the image appearing on the display surface 20a in a direction defined by the parallax barrier 21. The optical element 18 directs the image light toward the windshield 15. The optical element 18 may reflect or refract the image light. The windshield 15 reflects the image light to direct the light toward the eyes 5 of the user 13. The image light entering the eyes 5 of the user 13 causes the user 13 to view a parallax image as the virtual image 14. The user 13 views the virtual image 14 stereoscopically. An image corresponding to the parallax image in the virtual image 14 is also referred to as a parallax virtual image. A parallax virtual image is a parallax image projected through the optical system 30. An image corresponding to the planar image in the virtual image 14 is also referred to as a planar virtual image. The planar virtual image is a planar image projected through the optical system 30.

FIG. 4 is a flowchart of the detection process. The 3D display device 100 may start the detection process when, for example, the 3D display device 100 is activated (powered on). In step S1, a second image is obtained by capturing an image when light is not emitted. In step S2, a first image is obtained by capturing an image when light is emitted. In step S3, a third image as a difference image between the first image and the second images is generated. In step S4, the user 13 is detected based on the third image. The third image from which unintended information inside the movable body 10 has been removed can improve the detection accuracy in the detection process.

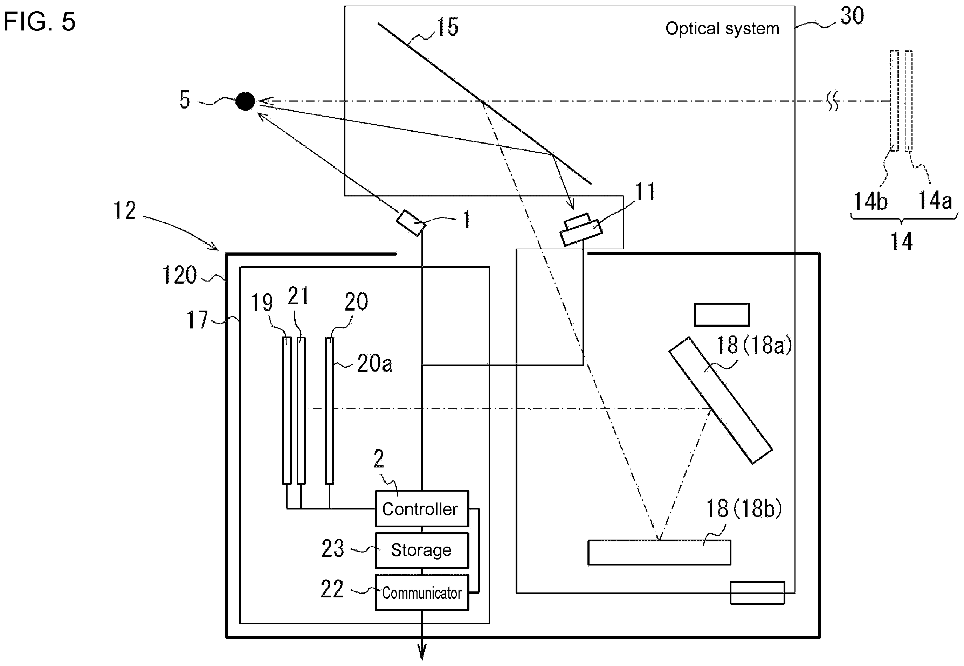

FIG. 5 is a schematic diagram of another example 3D display device 100. The imaging device 50 includes the light source 1, the camera 11, and the controller 2. The image projector 12 includes the 3D display device 17 and the optical element 18. The 3D display device 17 includes the backlight 19, the display 20, the parallax barrier 21, and the controller 2. In the present embodiment, the controller 2 in the imaging device 50 is also the controller in the image projector 12. In this structure, the controller in the imaging device 50 serves as the third controller in the image projector 12.

The imaging device 50 may further have the functions described below. Images of objects outside the movable body 10 (unintended information) that are relatively distant from the movable body 10 (structures such as buildings) or relatively close to the movable body 10 but have a low traveling velocity (e.g., roadside utility poles) are captured at the same position in the first image and the second image. The first image and the second image are captured at a rate of, for example, 1/60 second. At this rate, the first image and the second image are captured at the same position without any positional change. Images of objects outside the movable body 10 that are relatively close to the movable body 10 and have a high traveling velocity (e.g., other movable bodies passing by) may be captured at different positions in the first image and the second image. The third image may include information about objects outside the movable body 10 without such information about the objects being reduced. The controller 2 may predict the travel destination of an object traveling in an image based on, for example, multiple previous captured images, and generate a third image based on the difference between the first image and the second image. The controller 2 may correct the position of the object to the predicted travel destination in an image captured later, and may use the corrected image to generate the third image. The generated third image can include less information about images of objects outside the movable body 10.

### Examples

An example of a process to generate a difference image (a third image) performed by an imaging device 50 will be described. The imaging device 50 mounted on a movable body 10 captures an image of a user 13. Images are captured under the conditions described below.
- Light source: Light source manufactured by Kyocera Corporation (emission cycle of 30 times per second)
- Camera: Camera manufactured by Kyocera Corporation (image capturing cycle of 60 frames per second)
- Difference processing: PC software manufactured by Kyocera Corporation

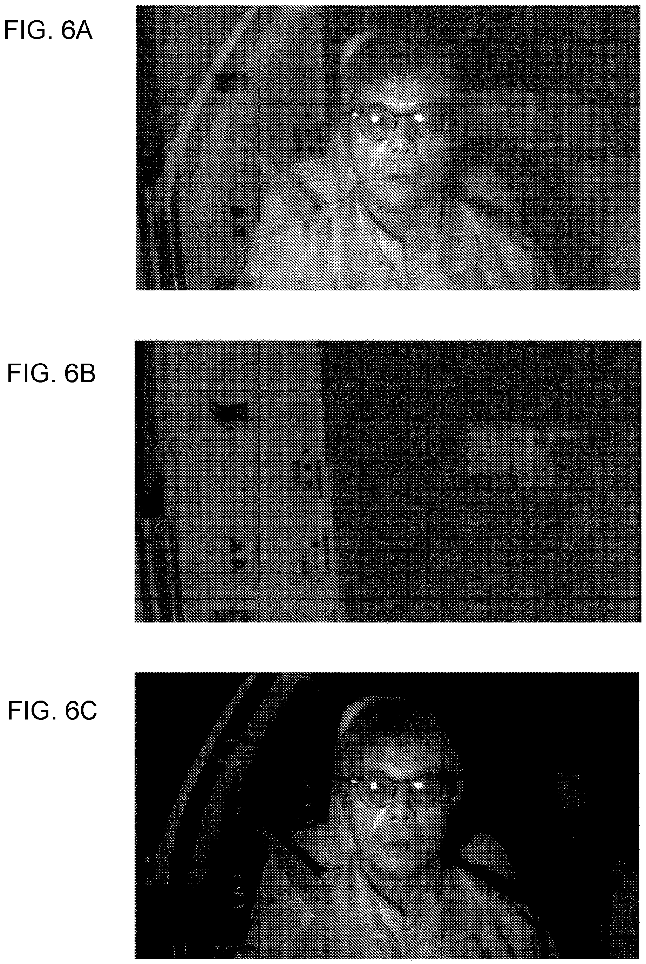

FIGs. 6A to 6C are photographs of the captured images and a difference image in this example. FIG. 6A is a first image captured when light is emitted from the light source. FIG. 6B is a second image captured when light is not emitted from the light source. FIG. 6C is a third image as a difference image. In this example, the first image in FIG. 6A includes an image of the user 13 inside the movable body 10 in the center, illuminated by a light source 1 with light having high brightness, and an image of a building outside the movable body 10 on the left. Information about the building can be unintended information in the detection process. Without the light source 1 emitting light, the image of the user 13 in the movable body 10 in the second image in FIG. 6B has low brightness and is visible. The image of the building is captured with external light (sunlight) and thus appears with the same brightness as the first image although the light source 1 does not emit light. The third image in FIG. 6C based on the difference between the first image and the second image includes an image of the user 13 in the center but includes no image of the building on the left. The third image can include less unintended information.

The present disclosure may be implemented in the following forms.

In one embodiment of the present disclosure, an imaging device includes a camera, a light source, and a controller. The camera faces an optical member that at least partially transmits and reflects light. The camera generates a captured image by obtaining, in a first cycle, an image of first light transmitted through the optical member and second light reflected from the optical member. The light source emits, in a second cycle, third light having a wavelength to be imaged with the camera. The controller processes the captured image. The second cycle is longer than the first cycle. The controller generates a fourth image as a difference between a second image captured when the third light is emitted and a s third image captured when the third light is not emitted.

In one embodiment of the present disclosure, a three-dimensional display device includes the above imaging device and an image projector. The image projector includes a display device, a magnifying optical system, and a third controller. The display device includes a display panel that emits image light, and a parallax barrier including light-transmissive portions and light-reducing portions being alternately arranged. The magnifying optical system magnifies the image light. The third controller controls the display device based on a detected position of an eye of a user.

In one embodiment of the present disclosure, a three-dimensional display device includes the above imaging device and an image projector. The image projector includes a display device and a magnifying optical system. The display device includes a display panel that emits image light, and a parallax barrier including light-transmissive portions and light-reducing portions being alternately arranged. The magnifying optical system magnifies the image light. A second controller controls the display device based on a detected position of an eye of a user.

In the embodiments of the present disclosure, the imaging device and the 3D display device can obtain captured images with less unintended information.

The structure according to the present disclosure is not limited to the structure described in the above embodiments, but may be changed or varied variously. For example, the functions of the components are reconfigurable unless any contradiction arises. Multiple components may be combined into a single unit, or a single component may be divided into separate units.

The drawings illustrating the structures according to the present disclosure are schematic and are not drawn to scale relative to the actual size of each component.

In the present disclosure, first, second, or others are identifiers for distinguishing the components. The identifiers of the components distinguished with first, second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as first and second in the present disclosure alone should not be used to determine the order of components or to suggest the existence of smaller number identifiers.

In the present disclosure, x-axis, y-axis, and z-axis are used for ease of explanation and may be interchangeable with one another. The orthogonal coordinate system including x-axis, y-axis, and z-axis is used to describe the structures according to the present disclosure. The positional relationship between the components in the present disclosure is not limited to being orthogonal.

### REFERENCE SIGNS

- 1: light source
- 2: controller
- 5: eye (5L: left eye, 5R: right eye)
- 10: movable body
- 11: camera
- 12: image projector
- 13: user
- 14: virtual image (14a: first virtual image, 14b: second virtual image)
- 15: windshield
- 16: eye box
- 17: three-dimensional (3D) display device
- 18: optical element (18a: first mirror, 18b: second mirror)
- 19: backlight
- 20: display (20a: display surface)
- 201L: left-eye viewing area
- 201R: right-eye viewing area
- 21: parallax barrier (21a: light-blocking portion, 21b: open portion)
- 22: communicator
- 23: storage
- 24: controller
- 30: optical system
- 50: imaging device
- 100: three-dimensional (3D) display device
- 120: housing

## Claims

1. An imaging device, comprising:
a camera facing an optical member configured to at least partially transmit and reflect light, the camera being configured to generate a captured image by obtaining, in a first cycle, an image of first light transmitted through the optical member and second light reflected from the optical member;
a light source configured to emit, in a second cycle, third light having a wavelength to be imaged with the camera; and
a controller configured to process the captured image,
wherein the second cycle is longer than the first cycle, and
the controller generates a third image as a difference between a first image captured when the third light is emitted and a second image captured when the third light is not emitted.

2. The imaging device according to claim 1, wherein
the second cycle is an integer multiple of the first cycle.

3. The imaging device according to claim 1 or claim 2, wherein
the light source operates in direct or indirect cooperation with the camera.

4. The imaging device according to claim 3, wherein
the light source and the camera operate in response to a common control signal.

5. The imaging device according to any one of claims 1 to 4, wherein
the light source emits the third light toward a space expected to include a user.

6. The imaging device according to claim 5, wherein
the light source emits the third light to reach the space expected to include the user after being reflected from the optical member.

7. The imaging device according to any one of claims 1 to 6, wherein
the third image is an image obtained by subtracting the second image from the first image.

8. The imaging device according to claim 7, wherein
the controller generates the third image by subtracting, from the first image, the second image obtained before the first image.

9. The imaging device according to any one of claims 1 to 8, wherein
the first image and the second image obtained before the first image are captured with a same exposure value.

10. The imaging device according to any one of claims 1 to 9, wherein
the controller controls an exposure value of the camera based on the first image.

11. The imaging device according to claim 10, wherein
the controller controls the exposure value of the camera without using the second image.

12. The imaging device according to claim 10 or claim 11, wherein
the controller controls the exposure value of the camera without using the third image.

13. The imaging device according to any one of claims 1 to 12, wherein
the optical member reduces the first light.

14. The imaging device according to any one of claims 1 to 13, wherein
the controller detects a user based on the third image.

15. The imaging device according to any one of claims 1 to 14, wherein
the controller detects a position of an eye of a user based on the third image.

16. The imaging device according to any one of claims 1 to 13, wherein
the controller outputs the third image, and
the imaging device further comprises a second controller configured to detect a position of an eye of a user based on the third image output by the controller.

17. A three-dimensional display device, comprising:
the imaging device according to claim 15; and
an image projector configured to project image light toward the optical member, the image projector including
a display device configured to project a display image as the image light,
a magnifying optical system configured to magnify the image light, and
a third controller configured to control the display device,
wherein the display device includes
a display panel configured to emit the image light, and
a parallax barrier including light-transmissive portions and light-reducing portions being alternately arranged, and
the third controller controls the display device based on the detected position of the eye of the user.

18. The three-dimensional display device according to claim 17, wherein
the controller serves as the third controller.

19. A three-dimensional display device, comprising:
the imaging device according to claim 16; and
an image projector configured to project image light toward the optical member, the image projector including
a display device configured to project a display image as the image light, and
a magnifying optical system configured to magnify the image light,
wherein the display device includes
a display panel configured to emit the image light, and
a parallax barrier including light-transmissive portions and light-reducing portions being alternately arranged, and
the second controller controls the display device based on the detected position of the eye of the user.
